# EUROPEAN PATENT APPLICATION

(11) **EP 4 672 804 A1**
(43) Date of publication of application: **31.12.2025**
(21) Application number: 24777895.4
(22) Date of filing: 22.03.2024
(51) Int. Cl.: H04W 24/08

(54) **INFORMATION TRANSMISSION METHOD, APPARATUS, DEVICE, AND STORAGE MEDIUM**

(30) Priority: 24.03.2023 CN 202310301189
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: CHEN, Jingjing, Beijing 100053 (CN)
(74) Representative: Hertin und Partner Rechts- und Patentanwälte PartG mbB
(86) International application number: PCT/CN2024/083213
(87) International publication number: WO 2024/199106

(57) **Abstract**

The present application discloses an information transmission method, device, equipment and a storage medium. The method includes: transmitting first information, wherein the first information is related to measurement or measurement gap; and/or, receiving second information, wherein the second information is related to measurement or measurement gap.

## Description

### CROSS-REFERENCE TO RELATED APPLICATION

The present application is filed based on and claims the priority of Chinese Application No. 202310301189.7 filed on March 24, 2023, the disclosure of which are incorporated in their entireties by reference herein.

### TECHNICAL FIELD

The present disclosure relates to the field of wireless communication technologies, and in particular to an information transmission method, device, equipment and storage medium.

### BACKGROUND

At present, a variety of measurement gaps have been introduced, such as concurrent measurement gaps, preconfigured measurement gaps, network-controlled small measurement gaps, etc. There are differences in configuration manners, activation or deactivation manners, and patterns of specific measurement gaps of different types of measurement gaps. At present, the network can configure multiple measurement gaps and corresponding priorities for a terminal. In case that there is a measurement gap conflict caused by overlapping between the configured multiple measurement gaps, the protocol stipulates that the low-priority measurement gap is discarded. However, since the purpose of each measurement gap is determined by the terminal itself, and the terminal needs to discard the low-priority measurement gap according to the protocol regulations when resolving the measurement gap conflict, this may cause a measurement gap that the terminal expects to use to complete an important function or operation to be discarded due to a relatively low priority, which results in that the terminal cannot complete the important function or operation, which in turn leads to a decrease in performance of the terminal.

### SUMMARY

In view of this, embodiments of the present disclosure are intended to provide an information transmission method, device, equipment and storage medium.

The technical solutions in the embodiments of the present disclosure are implemented as follows.

One embodiment of the present disclosure provides an information transmission method, applied to a user equipment, including:
transmitting first information, wherein the first information is related to measurement or measurement gap;
   and/or,
receiving second information, wherein the second information is related to measurement or measurement gap.

Further, according to at least one embodiment of the present application, the transmitting first information, indicates:
transmitting the first information to a network;
wherein the first information includes:
   a measurement gap; and/or,
   purpose of the measurement gap; and/or,
   priority.

Further, according to at least one embodiment of the present application, the measurement gap represents relevant information of the measurement gap that the user equipment expects to use;
the purpose of the measurement gap represents the purpose of the measurement gap that the user equipment expects to use; and
the priority is the UE's measurement gap priority preference.

Further, according to at least one embodiment of the present application, the receiving second information, includes:
receiving second information sent by a network;
wherein the second information includes:
   measurement gap; and/or,
   purpose of the measurement gap; and/or,
   priority.

Further, according to at least one embodiment of the present application, the measurement gap represents relevant information of the measurement gap configured by the network for the user equipment;
the purpose of the measurement gap represents the purpose of the measurement gap configured by the network for the user equipment; and
the priority represents the priority of the measurement gap configured by the network for the user equipment.

Further, according to at least one embodiment of the present application, the purpose of the measurement gap includes:
reception of paging; and/or,
reception of broadcast; and/or,
reception of system message; and/or,
measurement for RRM; and/or,
intra-frequency measurement; and/or,
inter-frequency measurement; and/or,
measurement for handover; and/or,
layer 1 measurement.

Further, according to at least one embodiment of the present application, in case that the same measurement gap is used for different purposes, the measurement gap has different priorities when using for the different purposes.

Further, according to at least one embodiment of the present application, the first information is used to indicate the following information:
an aperiodic measurement gap; and/or,
an aperiodic measurement gap used for system message; and/or,
a measurement gap of longest period used for system message; and/or,
an aperiodic measurement gap used for paging; and/or,
a measurement gap of longest period used for paging.

Further, according to at least one embodiment of the present application, the first information is used to indicate the following information:
an aperiodic measurement gap; and/or,
an aperiodic measurement gap of high priority; and/or,
a measurement gap with the longest period having high priority

Further, according to at least one embodiment of the present application, the first information is used to indicate the following information:
a measurement gap used for paging; and/or,
a measurement gap used for broadcasting; and/or,
a measurement gap used for system message; and/or,
a measurement gap used for RRM measurement; and/or,
a measurement gap used for intra-frequency measurement; and/or,
a measurement gap used for inter-frequency measurement; and/or,
a measurement gap used for handover measurement; and/or,
a measurement gap used for L1 measurement.

Further, according to at least one embodiment of the present application, the first information is used to indicate the following information:
a priority of a measurement gap; and/or,
a measurement gap with a highest priority; and/or,
a priority of a measurement gap whose repetition period is greater than or equal to a first threshold; and/or,
a priority of a measurement gap whose repetition period is greater than or equal to the first threshold being a high priority; and/or,
a measurement gap whose repetition period is greater than or equal to a second threshold.

Further, according to at least one embodiment of the present application, the second information is used to indicate the following information:
aperiodic measurement gaps being of high priority; and/or,
a measurement gap with the longest period being of high priority; and/or,
a measurement gap for intra-frequency measurements being of high priority; and/or,
a measurement gap used for paging being of high priority; and/or,
a measurement gap for system messages being of high priority; and/or,
keeping at least two measurement gaps; and/or,
keeping multi-universal subscriber identity module gaps.

Further, according to at least one embodiment of the present application, the keeping multi-universal subscriber identity module gaps includes:
keeping multi-universal subscriber identity module gaps used for the same frequency.

Further, according to at least one embodiment of the present application, the second information is used to indicate the following information:
a measurement gap used for paging; and/or,
a measurement gap used for broadcasting; and/or,
a measurement gap used for system message; and/or,
a measurement gap used for RRM measurement; and/or,
a measurement gap used for intra-frequency measurement; and/or,
a measurement gap used for inter-frequency measurement; and/or,
a measurement gap used for handover measurement; and/or,
a measurement gap used for L1 measurement.

Further, according to at least one embodiment of the present application, the method further includes:
receiving third information transmitted by the network;
wherein the third information is used to instruct the user equipment to report the purpose and/or priority of the measurement gap.

Further, according to at least one embodiment of the present application, the second information is used to indicate the following information:
if aperiodic measurement gap is collided with other measurement gaps, the aperiodic measurement gap is unconditionally kept and/or other measurement gaps are dropped;
if there is a measurement gap with the longest period in the measurement gaps where there is a conflict, the user equipment keeps the measurement gap with the longest period and/or drops other measurement gaps;
in the measurement gaps where there is a conflict, the measurement gap used for the intra-frequency measurement is kept;
if the colliding measurement gaps are MUSIM gaps, the user equipment keeps all colliding measurement gaps;
if the colliding measurement gaps are MUSIM gaps and the colliding MUSIM gaps are used for related measurements or receptions at the same frequency, the user equipment keeps all colliding measurement gaps;
in the measurement gap where there is a conflict, the measurement gap used for paging is kept;
in the measurement gap where there is a conflict, the measurement gap used for system messages is kept.

At least one embodiment of the present application provides an information transmission method, applied to a network device, including:
receiving first information, wherein the first information is related to measurement or measurement gap;
   and/or,
transmitting second information, wherein the second information is related to measurement or measurement gap.

Further, according to at least one embodiment of the present application, the receiving first information, includes:
receiving the first information transmitted by a user equipment;
wherein the first information includes:
a measurement gap; and/or,
purpose of the measurement gap; and/or,
priority.

Further, according to at least one embodiment of the present application, the receiving first information includes:
receiving the first information transmitted by a user equipment;
where the first information includes:
   a measurement gap; and/or,
   purpose of the measurement gap; and/or,
   priority.

Further, according to at least one embodiment of the present application, the measurement gap represents relevant information of the measurement gap that the user equipment expects to use; the purpose of the measurement gap represents the purpose of the measurement gap that the user equipment expects to use; and the priority is the UE's measurement gap priority preference.

Further, according to at least one embodiment of the present application, the transmitting second information, includes:
transmitting the second information to the user equipment;
wherein the second information includes:
   measurement gap; and/or,
   purpose of the measurement gap; and/or,
   priority.

Further, according to at least one embodiment of the present application, the measurement gap represents relevant information of the measurement gap configured by the network for the user equipment; the purpose of the measurement gap represents the purpose of the measurement gap configured by the network for the user equipment; and the priority represents the priority of the measurement gap configured by the network for the user equipment.

Further, according to at least one embodiment of the present application, the purpose of the measurement gap includes:
reception of paging; and/or,
reception of broadcasts; and/or,
reception of system messages; and/or,
measurement for RRM; and/or,
intra-frequency measurement; and/or,
inter-frequency measurement; and/or,
measurement for handover; and/or,
layer 1 measurement.

Further, according to at least one embodiment of the present application, in case that the same measurement gap is used for different purposes, the measurement gap has different priorities when using for different purposes.

Further, according to at least one embodiment of the present application, the first information is used to indicate the following information:
an aperiodic measurement gap; and/or,
an aperiodic measurement gap used for system message; and/or,
a measurement gap of longest period used for system message; and/or,
an aperiodic measurement gap used for paging; and/or,
a measurement gap of longest period used for paging.

Further, according to at least one embodiment of the present application, the first information is used to indicate the following information:
an aperiodic measurement gap; and/or,
an aperiodic measurement gap of high priority; and/or,
a measurement gap with the longest period having high priority.

Further, according to at least one embodiment of the present application, the first information is used to indicate the following information:
a measurement gap used for paging; and/or,
a measurement gap used for broadcasting; and/or,
a measurement gap used for system message; and/or,
a measurement gap used for RRM measurement; and/or,
a measurement gap used for intra-frequency measurement; and/or,
a measurement gap used for inter-frequency measurement; and/or,
a measurement gap used for handover measurement; and/or,
a measurement gap used for L1 measurement.

Further, according to at least one embodiment of the present application, the first information is used to indicate the following information:
a priority of a measurement gap; and/or,
a measurement gap with a highest priority; and/or,
a priority of a measurement gap whose repetition period is greater than or equal to a first threshold; and/or,
a priority of a measurement gap whose repetition period is greater than or equal to the first threshold being a high priority; and/or,
a measurement gap whose repetition period is greater than or equal to a second threshold.

Further, according to at least one embodiment of the present application, the second information is used to indicate the following information:
aperiodic measurement gaps being of high priority; and/or,
a measurement gap with the longest period being of high priority; and/or,
a measurement gap for intra-frequency measurements being of high priority; and/or,
a measurement gap used for paging being of high priority; and/or,
a measurement gap for system messages being of high priority; and/or,
keeping at least two measurement gaps; and/or,
keeping multi-universal subscriber identity module gaps.

Further, according to at least one embodiment of the present application, the keeping multi-universal subscriber identity module gaps includes: keeping multi-universal subscriber identity module gaps used for the same frequency.

Further, according to at least one embodiment of the present application, the second information is used to indicate the following information:
a measurement gap used for paging; and/or,
a measurement gap used for broadcasting; and/or,
a measurement gap used for system message; and/or,
a measurement gap used for RRM measurement; and/or,
a measurement gap used for intra-frequency measurement; and/or,
a measurement gap used for inter-frequency measurement; and/or,
a measurement gap used for handover measurement; and/or,
a measurement gap used for L1 measurement.

Further, according to at least one embodiment of the present application, the method further includes: transmitting third information to the user equipment;
where the third information is used to instruct the user equipment to report the purpose and/or priority of the measurement gap.

Further, according to at least one embodiment of the present application, the second information is further used to indicate at least one of the following:
if aperiodic measurement gap is collided with other measurement gaps, the aperiodic measurement gap is unconditionally kept and/or other measurement gaps are dropped;
if there is a measurement gap with the longest period in the measurement gaps where there is a conflict, the user equipment keeps the measurement gap with the longest period and/or drops other measurement gaps;
in the measurement gaps where there is a conflict, the measurement gap used for the intra-frequency measurement is kept;
if the colliding measurement gaps are MUSIM gaps, the user equipment keeps all colliding measurement gaps;
if the colliding measurement gaps are MUSIM gaps and the colliding MUSIM gaps are used for related measurements or receptions at the same frequency, the user equipment keeps all colliding measurement gaps;
in the measurement gap where there is a conflict, the measurement gap used for paging is kept;
in the measurement gap where there is a conflict, the measurement gap used for system messages is kept.

At least one embodiment of the present application provides an information transmission device, including:
a first transceiver unit used to transmit first information, wherein the first information is related to measurement or measurement gap; and/or, receive second information, wherein the second information is related to measurement or measurement gap.

At least one embodiment of the present application provides an information transmission device, including:
a second transceiver unit used to receive first information, wherein the first information is related to measurement or measurement gap; and/or, transmit second information, wherein the second information is related to measurement or measurement gap.

At least one embodiment of the present application provides a user equipment, including: a processor and a memory for storing a computer program executable on the processor;
wherein the processor is used to, when executing the computer program, perform steps of any one of the methods described above on the UE side.

At least one embodiment of the present application provides a network device, including: a processor and a memory for storing a computer program executable on the processor;
wherein the processor is used to, when executing the computer program, perform steps of any one of the methods described above on the network device side.

According to the information transmission method, device, equipment and storage medium provided in the embodiments of the present disclosure, first information is transmitted, where the first information is related to measurement or measurement gap; and/or, second information is received, where the second information is related to measurement or measurement gap. By adopting the technical solutions provided in the embodiments of the present application, the user equipment transmits the first information to assist the network in learning the information related to the measurement or measurement gap that the user equipment expects to use, thereby ensuring that the information on the use of the measurement or measurement gap between the user equipment and the network is consistent, so that it can be avoided that in the event that there is a conflict in measurement gaps, the user equipment drops the measurement gap used for a relatively important function or operation, resulting in the user equipment being unable to complete the function or operation, thereby causing the problem of reduced performance of the user equipment. And/or, the user equipment receives the second information so that the user equipment learns the information related to the measurement or measurement gap that the network expects the user equipment to use, thereby ensuring that the information on the use of the measurement or measurement gap between the user equipment and the network is consistent, so that it can be avoided that in the event that there is a conflict in measurement gaps, the conflict drops the measurement gap used for a relatively important function or operation, resulting in the conflict being unable to complete the function or operation, thereby causing the problem of reduced performance of the user equipment.

### BRIEF DESCRIPTION OF THE DRAWINGS

FIG. 1 is a schematic diagram of a first implementation flow of an information transmission method according to an embodiment of the present application;
FIG. 2 is a schematic diagram of a second implementation flow of an information transmission method according to an embodiment of the present application;
FIG. 3 is a schematic diagram of a first specific implementation flow of an information transmission method according to an embodiment of the present application;
FIG. 4 is a schematic diagram of a second specific implementation flow of an information transmission method according to an embodiment of the present application;
FIG. 5 is a first schematic diagram of an information transmission device according to an embodiment of the present application;
FIG. 6 is a second schematic diagram of an information transmission device according to an embodiment of the present application;
FIG. 7 is a schematic diagram of a user equipment according to an embodiment of the present application; and
FIG. 8 is a schematic diagram of a network device according to an embodiment of the present application.

### DETAILED DESCRIPTION

Before introducing the technical solutions of the embodiments of the present application, the related art is first explained.

In the related art, a variety of measurement gaps are introduced, such as concurrent measurement gaps, preconfigured measurement gaps, network-controlled small measurement gaps, multi-universal subscriber identity module (MUSIM) measurement gaps, positioning measurement gaps, non-terrestrial network (NTN) measurement gaps, etc. There are differences in the configuration manners, activation or deactivation manners, and patterns of specific measurement gaps of different types of measurement gaps. At present, due to time and complexity issues, the scenario involving the joint use of multiple measurement gaps is not considered. Specifically, only simple scenarios in which various measurement gaps are used independently are considered, with the number of simultaneously configured measurement gaps further restricted to no more than two. In actual networks, scenarios where multiple measurement gaps coexist do occur, and this remains one of the key research focuses for the future.

Regarding concurrent measurement gaps, the network will indicate the priority of each measurement gap through Radio Resource Control (RRC), and two priorities cannot be the same. When there is time domain overlap in the measurement gaps, a user equipment abandons the measurement gap corresponding to the low priority. There are two cases where there is time domain overlap in the measurement gaps: a first case where there is real overlap in the time domain; a second case where there is no overlap in the time domain, but a gap between the two is smaller than a certain value, causing the user equipment (UE) to be unable to handle it.

Considering factors such as complexity and the processing capability of the user equipment, the coexistence of multiple measurement gaps may cause measurement gap conflicts due to overlapping of the measurement gaps. At present, the user equipment is responsible for implementing how to use multiple measurement gaps, while the network lacks information related to the user equipment's implementation. In other words, due to inconsistencies in the information of usage of measurement gaps between the network and the user equipment, the user equipment may likely drop the measurement gap used for relatively important functions or operations, which could prevent the user equipment from completing related functions or operations, thereby leading to performance degradation; such operations include receiving broadcasts or paging, intra-frequency measurements, and so on.

For example, since there are scenarios where multiple measurement gaps coexist, it is likely that multiple measurement gaps will coexist. Taking the multi-universal subscriber identity module (MUSIM) gaps as an example, up to 4 measurement gaps can be configured. If other types of measurement gaps are considered, the number of measurement gaps will be more. How the user equipment uses multiple measurement gaps is implemented by the user equipment in the related art, and the network has no relevant information. This leads to the problem that the user equipment uses a measurement gap with a lower priority for a more important operation. Taking MUSIM as an example, considering transmission of reference symbols, broadcasts, etc., the user equipment uses this measurement gap for reception of broadcast or paging. When there is a conflict between this measurement gap and other measurement gaps, this measurement gap is discarded, that is, the user equipment cannot use this measurement gap, resulting in that the user equipment is unable to perform important operations, thereby causing performance degradation. For another example, with transition of Bandwidth Parts (BWP), it is likely that intra-frequency measurement will also require measurement gaps; however, the measurement gap used by the user equipment for intra-frequency measurements are dropped, causing the user equipment to be unable to perform intra-frequency measurements. Since intra-frequency measurements are relatively important for mobility, this in turn affects mobility.

In view of this, in one embodiment of the present application, first information is transmitted, where the first information is related to measurement or measurement gap; and/or, second information is received, where the second information is related to measurement or measurement gap.

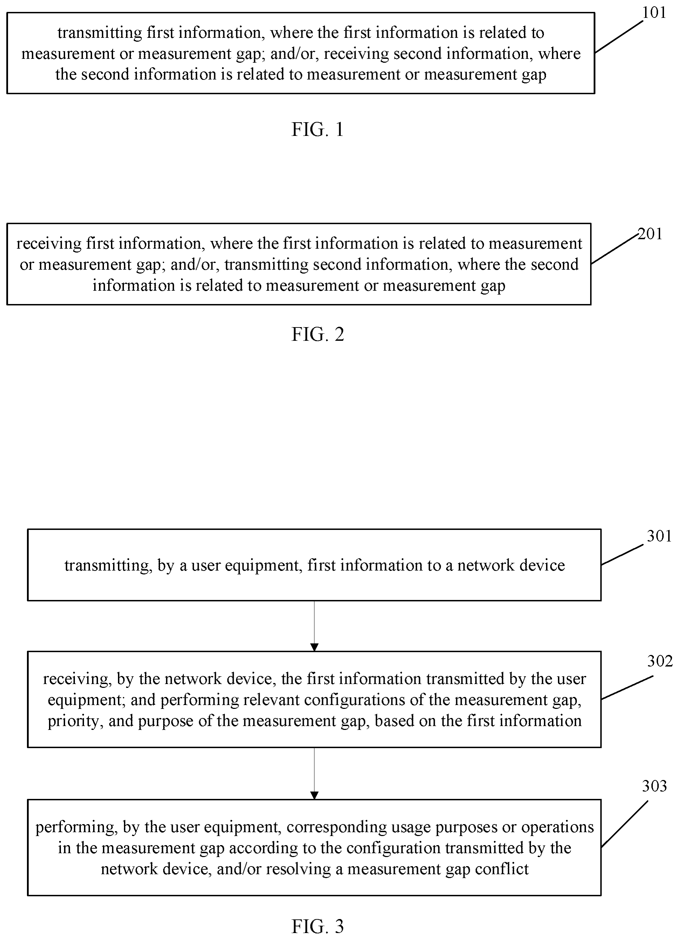

FIG. 1 is a schematic diagram of an implementation flow of an information transmission method according to an embodiment of the present application, which is applied to a user equipment (UE). As shown in FIG. 1, the method includes a step 101.

Step 101: transmitting first information, where the first information is related to measurement or measurement gap; and/or, receiving second information, where the second information is related to measurement or measurement gap.

In actual application, the transmitting first information includes that the user equipment transmits the first information to the network. The network can also be described as a network device, or as a network node, or as a base station.

Based on this, in one embodiment, the transmitting first information indicates:
transmitting first information to the network;
where the first information includes:
   a measurement gap; and/or,
   purpose of the measurement gap; and/or,
   priority.

Here, the measurement gap represents relevant information of the measurement gap that the user equipment expects to use; the purpose of the measurement gap represents the purpose of the measurement gap that the user equipment expects to use; and the priority is the UE's measurement gap priority preference.

It is understandable that the measurement gap can also be described as measurement gap(s) or as a gap, or as gap(s). The measurement gap includes: MUSIM gap (or described as MUSIM measurement gap, or MUSIM MG), Pre-MG, NCSG, positioning gap, NTN gap. The network can configure multiple MUSIM gaps, and the user equipment indicates the priority of each MUSIM gap, which helps the network and the user equipment to have a consistent understanding of the use of the measurement gap, and is conducive to the resolution of measurement conflicts or measurement gap overlaps.

It is to be noted that the purpose (or described as objective) and priority of the measurement gap in the first information may not coexist simultaneously. Regardless of whether the two coexist or not, the essence is to assist the network to better configure priorities. The content in the first information is tendency or preference of the user equipment to assist the network to obtain more information.

It is to be understood that the gain of the user equipment assisting the network in knowing the purpose/ objective of the measurement gap is to assist the network to know how the user equipment uses the measurement gap, so as to can configure the measurement gap used by the user equipment for more important operations with a higher priority, thereby avoiding scenarios where the measurement gap is dropped due to its lower priority in the event of a conflict with other measurement gaps, resulting in the user equipment being unable to perform related operations.

In actual application, the receiving second information includes obtaining the second information in advance from the protocol, that is, pre-defining in the protocol, and/or receiving the second information from the network. It can also be described as that some information units in the second information are pre-defined in the protocol, and some information units are sent through the network.

Based on this, in one embodiment, the receiving the second information includes:
receiving second information sent by the network;
where the second information includes:
   measurement gap; and/or,
   purpose of the measurement gap; and/or,
   priority.

Here, the measurement gap represents relevant information of the measurement gap configured by the network for the user equipment; the purpose of the measurement gap represents the purpose of the measurement gap configured by the network for the user equipment; and the priority represents the priority of the measurement gap configured by the network for the user equipment.

It is understandable that the measurement gap can also be described as measurement gap(s) or as a gap, or as gap(s). The measurement gap includes: MUSIM gap (or described as MUSIM measurement gap, or MUSIM MG), Pre-MG, NCSG, positioning gap, NTN gap. The network can configure multiple MUSIM gaps, and the user equipment indicates the priority of each MUSIM gap, which helps the network and the user equipment to have a consistent understanding of the use of the measurement gap, and is conducive to the resolution of measurement conflicts or measurement gap overlaps.

It is to be understood that the measurement gap transmitted by the user equipment (or described as a preferred measurement gap) or the measurement gap transmitted by the network (or described as a measurement gap configured by the network and received by the user equipment) includes a measurement gap index (which can also be described as a gap ID or as a gap pattern ID) and/or a length of the measurement gap and/or a repetition period of the measurement gap and/or an offset of the measurement gap and/or a starting position of the measurement gap (including at least one of a starting system frame number, frame, and subframe).

It is to be understood that the relationship between the purpose of the measurement gap in the second information and the purpose of the measurement gap in the first information is that the network first learns how the user equipment uses the measurement gap based on the first information reported by the user equipment, and then performs priority configuration of the measurement gap based on the first information.

In one embodiment, the purpose of the measurement gap includes:
reception of paging; and/or,
reception of broadcasts; and/or,
reception of system messages; and/or,
measurement for RRM; and/or,
intra-frequency measurement; and/or,
inter-frequency measurement; and/or,
measurements for handover; and/or,
layer 1 measurement.

It is understandable that reception here can also be described as obtaining.

It is to be understood that layer 1 (or described as L1) measurement includes: L1 measurement of a serving cell and/or L1 measurement of a cell having a physical cell identifier (PCI) different from the serving cell. L1 measurement includes L1-RSRP and/or L1-SINR.

In one embodiment, in case that the same measurement gap is used for different purposes, the measurement gap has different priorities when using for different purposes.

It is to be understood that the same measurement gap can also be described as the same set of measurement gaps.

In actual application, one solution is that the user equipment explicitly notifies the network of the purpose (or describes it as an objective) of the measurement gap.

In actual application, another solution is to implicitly specify this through configuration of measurement gaps in the first information. This solution does not require including the purpose (or objective) of the measurement gap, but it needs to be agreed upon in the protocol to ensure consistent understanding between the user equipment and the network. Specifically, it includes at least one of the following: if the measurement gap is aperiodic, the measurement gap is used for reception of system messages; if the measurement gap has the longest period, the measurement gap is used for reception of paging.

Based on this, in one embodiment, the first information is used to indicate the following information:
an aperiodic measurement gap; and/or,
an aperiodic measurement gap used for system message; and/or,
a measurement gap of longest period used for system message; and/or,
an aperiodic measurement gap used for paging; and/or,
a measurement gap of longest period used for paging.

Here, the purpose of the measurement gap is implicitly notified. It is to be understood that, in one or more measurement gaps reported by the user equipment (or described as reported preferred measurement gaps), it is implicit (or described as negotiated between the network and the user equipment, or described as predefined in the protocol) that the aperiodic measurement gap is used for system messages and/or paging. And/or, in one or more measurement gaps reported by the user equipment (or described as reported preferred measurement gaps), it is implicit (or described as negotiated between the network and the user equipment, or described as predefined in the protocol) that the measurement gap with the largest period (or described as the longest period) is used for system messages and/or paging. In this way, the user equipment does not need to indicate the specific purpose of the measurement gap, and then signaling overhead can be saved.

In actual application, one solution is that the user equipment explicitly notifies the network of the priority.

In actual application, another solution is to implicitly specify this through configuration of measurement gaps in the first information. This solution does not require explicitly including the priority, but it needs to be agreed upon in the protocol to ensure consistent understanding between the user equipment and the network. Specifically, it includes at least one of the following: if the measurement gap is aperiodic, the priority of the measurement gap is high priority; if the measurement gap has the longest period, the priority of the measurement gap is high priority.

Based on this, in one embodiment, the first information is used to indicate the following information:
an aperiodic measurement gap; and/or,
an aperiodic measurement gap of high priority; and/or,
a measurement gap with the longest period having high priority.

Here, the priority is implicitly notified.

It is to be understood that, in one or more measurement gaps reported by the user equipment (or described as reported preferred measurement gaps), it is implicit (or described as negotiated between the network and the user equipment, or described as predefined in the protocol) that the priority of the aperiodic measurement gap is a high priority, or is described as a measurement gap with the highest priority among the measurement gaps reported by the user equipment. In one or more measurement gaps reported by the user equipment (or described as reported preferred measurement gaps), it is implicit (or described as negotiated between the network and the user equipment, or described as predefined in the protocol) that the measurement gap with the largest period (or described as the longest period) is a high priority, or described as a measurement gap with the highest priority among the measurement gaps reported by the user equipment. In this way, the user equipment does not need to indicate the specific priority of the measurement gap, and then signaling overhead can be saved.

In one embodiment, the first information is used to indicate the following information:
a measurement gap used for paging; and/or,
a measurement gap used for broadcasting; and/or,
a measurement gap used for system message; and/or,
a measurement gap used for RRM measurement; and/or,
a measurement gap used for intra-frequency measurement; and/or,
a measurement gap used for inter-frequency measurement; and/or,
a measurement gap used for handover measurement; and/or,
a measurement gap used for L1 measurement.

It is to be understood that the measurement gap used for paging can also be described as the measurement gap being related to paging; the measurement gap used for broadcasting can also be described as the measurement gap being related to broadcasting; the measurement gap used for system message can also be described as the measurement gap being related to system message; the measurement gap used for RRM measurement can also be described as the measurement gap being related to RRM measurement; the measurement gap used for intra-frequency measurement can also be described as the measurement gap being related to intra-frequency measurement; the measurement gap used for inter-frequency measurement can also be described as the measurement gap being related to inter-frequency measurement; the measurement gap used for handover measurement can also be described as the measurement gap being related to handover measurement; the measurement gap used for L1 measurement can also be described as the measurement gap being related to L1 measurement.

In one embodiment, the first information is used to indicate the following information:
a priority of a measurement gap; and/or,
a measurement gap with a highest priority; and/or,
a priority of a measurement gap whose repetition period is greater than or equal to a first threshold; and/or,
a priority of a measurement gap whose repetition period is greater than or equal to the first threshold being a high priority; and/or,
a measurement gap whose repetition period is greater than or equal to a second threshold.

It is understandable that the priority of the measurement gap transmitted (or described as reported, or described as indicated) by the user equipment includes the priority of the measurement gap preferred by the user equipment (the priority includes a priority level). The network can configure priority of the measurement gap based on this information. The user equipment can indicate the priority of each measurement gap, or only indicate the priority of some measurement gaps.

For example, it can be indicated by 1 bit, for example, TRUE or a value of 1 indicates high priority, which can also be described as indicating the priority of the corresponding measurement gap is high priority. For another example, indicating priority level, which can also be described as indicating the level of the priority of the corresponding measurement gap.

It is to be understood that the measurement gap with the highest priority includes a priority index (which can also be described as a priority level) and/or a measurement gap index (which can also be described as a gap ID or as a gap pattern ID) and/or a length of the measurement gap and/or a repetition period of the measurement gap and/or an offset of the measurement gap and/or a starting position of the measurement gap (including at least one of a starting system frame number, frame, and subframe).

For example, a 1-bit indication, for example, TRUE or a value of 1 indicates the highest priority, which can also be described as the priority of the corresponding measurement gap being the highest. For another example, the user equipment indicates or reports the ID of the measurement gap, which is the measurement gap of the highest priority, or is described as the measurement gap of the highest priority preferred by the user equipment.

In one embodiment, the second information is used to indicate the following information:
aperiodic measurement gaps being of high priority; and/or,
a measurement gap with the longest period being of high priority; and/or,
a measurement gap for intra-frequency measurements being of high priority; and/or,
a measurement gap used for paging being of high priority; and/or,
a measurement gap for system messages being of high priority; and/or,
keeping at least two measurement gaps; and/or,
keeping multi-universal subscriber identity module gaps.

It is to be noted that the paging and system messages here are paging and system messages of another system or another cell.

Specifically, in one scenario, assuming that the user equipment is currently in a system A, the user equipment can receive paging and/or system messages of a system B through the measurement gap. During the measurement gap, the user equipment can temporarily interrupt the connection between the user equipment and the system A and tune to the system B for reception.

In another scenario, assuming that the user equipment is currently in a cell C, the paging and/or system message of a cell D can be received through the measurement gap. During the measurement gap, the user equipment can temporarily interrupt the connection between the user equipment and the cell C and tune to the cell D for reception. The present application does not explicitly state that the second information is transmitted by the network; and this case also includes that the second information is predefined in the protocol.

Here, the multi-universal subscriber identity module may also be described as Multi-Universal Subscriber Identity Module (MUSIM). The multi-universal subscriber identity module gap may also be described as multi-universal subscriber identity module measurement gap, may also be described as MUSIM gap or MUSIM gap(s), or may be described as MUSIM MG (measurement gap). Keeping the multi-universal subscriber identity module gaps may also be described as keeping the colliding multi-universal subscriber identity module (MUSIM) gaps.

Specifically, in a scenario, when there is collision among different MUSIM gaps, keep all colliding MUSIM gaps.

In another scenario, when one or more MUSIM gaps conflict with other measurement gaps, the MUSIM gap(s) is kept and other measurement gaps are dropped.

The colliding measurement gaps may also be described as overlapping measurement gaps, or colliding measurements, including at least one of the following: at least two measurement gaps (or described as two sets of measurement gaps, or described as two measurement gap occasions) are overlapping in time domain; the distance between at least two measurement gaps (or described as two sets of measurement gaps or described as two measurement gap occasions) is smaller than or equal to a certain threshold. Keep may also be described as adoption or application.

In one embodiment, the keeping multi-universal subscriber identity module gaps includes: keeping multi-universal subscriber identity module gaps used for the same frequency.

In one embodiment, the second information is used to indicate the following information:
a measurement gap used for paging; and/or,
a measurement gap used for broadcasting; and/or,
a measurement gap used for system message; and/or,
a measurement gap used for RRM measurement; and/or,
a measurement gap used for intra-frequency measurement; and/or,
a measurement gap used for inter-frequency measurement; and/or,
a measurement gap used for handover measurement; and/or,
a measurement gap used for L1 measurement.

It is to be understood that the gain of the network transmitting the second information lies in that the network indicates, to the user equipment, the purpose of the measurement gap. The network can configure the second information with reference to the first information reported by the user equipment.

In one embodiment, the method further includes:
receiving third information transmitted by the network;
where the third information is used to instruct the user equipment to report the purpose and/or priority of the measurement gap.

In actual application, the second information received by the user equipment may further specify how to resolve the measurement gap conflict in a specific scenario.

Based on this, in one embodiment, the second information is further used to indicate at least one of the following:
if aperiodic measurement gap is collided with other measurement gaps, the aperiodic measurement gap is unconditionally kept and/or other measurement gaps are dropped;
if there is a measurement gap with the longest period in the measurement gaps where there is a conflict, the user equipment keeps the measurement gap with the longest period and/or drops other measurement gaps;
in the measurement gaps where there is a conflict, the measurement gap used for the intra-frequency measurement is kept;
if the colliding measurement gaps are MUSIM gaps, the user equipment keeps all colliding measurement gaps;
if the colliding measurement gaps are MUSIM gaps and the colliding MUSIM gaps are used for related measurements or receptions at the same frequency, the user equipment keeps all colliding measurement gaps;
in the measurement gap where there is a conflict, the measurement gap used for paging is kept;
in the measurement gap where there is a conflict, the measurement gap used for system messages is kept.

It is to be noted that the second information specifies how to resolve the measurement gap conflict in a specific scenario. In this case, the conflicts may be resolved based without being based on priority.

Here, the measurement gap with the longest period may refer to a measurement gap with the longest period among multiple measurement gaps configured for the user equipment.

Here, the user equipment keeps all colliding measurement gaps, which means that the user equipment does not drop any measurement gap.

It is to be noted that, "used to indicate the following information" in the foregoing description can also be described as "including".

In the embodiment of the present application, the following advantages are possessed:
(1) A solution to the problem of measurement gap conflicts is provided.
   Specifically, the user equipment transmits the first information to assist the network in learning the information related to the measurement or measurement gap that the user equipment expects to use, thereby ensuring that the information on the use of the measurement or measurement gap between the user equipment and the network is consistent, so that it can be avoided that in the event that there is a conflict in measurement gaps, the user equipment drops the measurement gap used for a relatively important function or operation, resulting in the user equipment being unable to complete the function or operation, thereby causing the problem of reduced performance of the user equipment. And/or, the user equipment receives the second information so that the user equipment learns the information related to the measurement or measurement gap that the network expects the user equipment to use, thereby ensuring that the information on the use of the measurement or measurement gap between the user equipment and the network is consistent, so that it can be avoided that in the event that there is a conflict in measurement gaps, the conflict drops the measurement gap used for a relatively important function or operation, resulting in the conflict being unable to complete the function or operation, thereby causing the problem of reduced performance of the user equipment.
(2) The user equipment may notify the network of the purpose and priority of the preferred measurement gap in an explicit manner, or may notify the network of the purpose and priority of the preferred measurement gap in an implicit manner.
(3) The network clearly configures the purpose of the measurement gap. The same measurement gap may have different priorities when used for different purposes.
(4) The second information may predefine how to resolve the measurement gap conflict in a specific scenario. In this way, the user equipment may adopt a predefined method to resolve the conflict in the specific scenario.

FIG. 2 is a schematic diagram of an implementation flow of an information transmission method according to an embodiment of the present application, which is applied to a network device. As shown in FIG. 2, the method includes step 201.

Step 201: receiving first information, where the first information is related to measurement or measurement gap; and/or, transmitting second information, where the second information is related to measurement or measurement gap.

In actual application, the receiving first information includes receiving the first information transmitted by a user equipment.

Based on this, in one embodiment, the receiving first information includes:
receiving the first information transmitted by a user equipment;
where the first information includes:
   a measurement gap; and/or,
   purpose of the measurement gap; and/or,
   priority.

Here, the measurement gap represents relevant information of the measurement gap that the user equipment expects to use; the purpose of the measurement gap represents the purpose of the measurement gap that the user equipment expects to use; and the priority is the UE's measurement gap priority preference.

It is understandable that the measurement gap can also be described as measurement gap(s) or as a gap, or as gap(s). The measurement gap includes: MUSIM gap (or described as MUSIM measurement gap, or MUSIM MG), Pre-MG, NCSG, positioning gap, NTN gap. The network can configure multiple MUSIM gaps, and the user equipment indicates the priority of each MUSIM gap, which helps the network and the user equipment to have a consistent understanding of the use of the measurement gap, and is conducive to the resolution of measurement conflicts or measurement gap overlaps.

It is to be noted that the purpose (or described as objective) and priority of the measurement gap in the first information may not coexist simultaneously. Regardless of whether the two coexist or not, the essence is to assist the network to better configure priorities. The content in the first information is tendency or preference of the user equipment to assist the network to obtain more information.

It is to be understood that the gain of the user equipment assisting the network in knowing the purpose/ objective of the measurement gap is to assist the network to know how the user equipment uses the measurement gap, so as to can configure the measurement gap used by the user equipment for more important operations with a higher priority, thereby avoiding scenarios where the measurement gap is dropped due to its lower priority in the event of a conflict with other measurement gaps, resulting in the user equipment being unable to perform related operations.

In actual application, the transmitting second information includes: transmitting, by the network, the second information to the user equipment. It can also be described as some information units in the second information are predefined in the protocol, and some information units are transmitted through the network.

Based on this, in one embodiment, the transmitting the second information includes:
transmitting the second information to the user equipment;
where the second information includes:
   measurement gap; and/or,
   purpose of the measurement gap; and/or,
   priority.

Here, the measurement gap represents relevant information of the measurement gap configured by the network for the user equipment; the purpose of the measurement gap represents the purpose of the measurement gap configured by the network for the user equipment; and the priority represents the priority of the measurement gap configured by the network for the user equipment.

It is understandable that the measurement gap can also be described as measurement gap(s) or as a gap, or as gap(s). The measurement gap includes: MUSIM gap (or described as MUSIM measurement gap, or MUSIM MG), Pre-MG, NCSG, positioning gap, NTN gap. The network can configure multiple MUSIM gaps, and the user equipment indicates the priority of each MUSIM gap, which helps the network and the user equipment to have a consistent understanding of the use of the measurement gap, and is conducive to the resolution of measurement conflicts or measurement gap overlaps.

It is to be understood that the measurement gap transmitted by the user equipment (or described as a preferred measurement gap) or the measurement gap transmitted by the network (or described as a measurement gap configured by the network and received by the user equipment) includes a measurement gap index (which can also be described as a gap ID or as a gap pattern ID) and/or a length of the measurement gap and/or a repetition period of the measurement gap and/or an offset of the measurement gap and/or a starting position of the measurement gap (including at least one of a starting system frame number, frame, and subframe).

It is to be understood that the relationship between the purpose of the measurement gap in the second information and the purpose of the measurement gap in the first information is that the network first learns how the user equipment uses the measurement gap based on the first information reported by the user equipment, and then performs priority configuration of the measurement gap based on the first information.

In one embodiment, the purpose of the measurement gap includes:
reception of paging; and/or,
reception of broadcasts; and/or,
reception of system messages; and/or,
measurement for RRM; and/or,
intra-frequency measurement; and/or,
inter-frequency measurement; and/or,
measurement for handover; and/or,
layer 1 measurement.

It is understandable that reception here can also be described as obtaining.

It is to be understood that layer 1 (or described as L1) measurement includes: L1 measurement of a serving cell and/or L1 measurement of a cell having a physical cell identifier (PCI) different from the serving cell. L1 measurement includes L1-RSRP and/or L1-SINR.

In one embodiment, in case that the same measurement gap is used for different purposes, the measurement gap has different priorities when using for different purposes.

It is to be understood that the same measurement gap can also be described as the same set of measurement gaps.

In actual application, one solution is that the user equipment explicitly notifies the network of the purpose (or describes it as an objective) of the measurement gap.

In actual application, another solution is to implicitly specify this through configuration of measurement gaps in the first information. This solution does not require including the purpose (or objective) of the measurement gap, but it needs to be agreed upon in the protocol to ensure consistent understanding between the user equipment and the network. Specifically, it includes at least one of the following: if the measurement gap is aperiodic, the measurement gap is used for reception of system messages; if the measurement gap has the longest period, the measurement gap is used for reception of paging.

Based on this, in one embodiment, the first information is used to indicate the following information:
an aperiodic measurement gap; and/or,
an aperiodic measurement gap used for system message; and/or,
a measurement gap of longest period used for system message; and/or,
an aperiodic measurement gap used for paging; and/or,
a measurement gap of longest period used for paging.

Here, the purpose of the measurement gap is implicitly notified.

It is to be understood that, in one or more measurement gaps reported by the user equipment (or described as reported preferred measurement gaps), it is implicit (or described as negotiated between the network and the user equipment, or described as predefined in the protocol) that the aperiodic measurement gap is used for system messages and/or paging. And/or, in one or more measurement gaps reported by the user equipment (or described as reported preferred measurement gaps), it is implicit (or described as negotiated between the network and the user equipment, or described as predefined in the protocol) that the measurement gap with the largest period (or described as the longest period) is used for system messages and/or paging. In this way, the user equipment does not need to indicate the specific purpose of the measurement gap, and then signaling overhead can be saved.

In actual application, one solution is that the user equipment explicitly notifies the network of the priority.

In actual application, another solution is to implicitly specify this through configuration of measurement gaps in the first information. This solution does not require explicitly including the priority, but it needs to be agreed upon in the protocol to ensure consistent understanding between the user equipment and the network. Specifically, it includes at least one of the following: if the measurement gap is aperiodic, the priority of the measurement gap is high priority; if the measurement gap has the longest period, the priority of the measurement gap is high priority.

Based on this, in one embodiment, the first information is used to indicate the following information:
an aperiodic measurement gap; and/or,
an aperiodic measurement gap of high priority; and/or,
a measurement gap with the longest period having high priority.

Here, the priority is implicitly notified.

It is to be understood that, in one or more measurement gaps reported by the user equipment (or described as reported preferred measurement gaps), it is implicit (or described as negotiated between the network and the user equipment, or described as predefined in the protocol) that the priority of the aperiodic measurement gap is a high priority, or is described as a measurement gap with the highest priority among the measurement gaps reported by the user equipment. In one or more measurement gaps reported by the user equipment (or described as reported preferred measurement gaps), it is implicit (or described as negotiated between the network and the user equipment, or described as predefined in the protocol) that the measurement gap with the largest period (or described as the longest period) is a high priority, or described as a measurement gap with the highest priority among the measurement gaps reported by the user equipment. In this way, the user equipment does not need to indicate the specific priority of the measurement gap, and then signaling overhead can be saved.

In one embodiment, the first information is used to indicate the following information:
a measurement gap used for paging; and/or,
a measurement gap used for broadcasting; and/or,
a measurement gap used for system message; and/or,
a measurement gap used for RRM measurement; and/or,
a measurement gap used for intra-frequency measurement; and/or,
a measurement gap used for inter-frequency measurement; and/or,
a measurement gap used for handover measurement; and/or,
a measurement gap used for L1 measurement.

It is to be understood that the measurement gap used for paging can also be described as the measurement gap being related to paging; the measurement gap used for broadcasting can also be described as the measurement gap being related to broadcasting; the measurement gap used for system message can also be described as the measurement gap being related to system message; the measurement gap used for RRM measurement can also be described as the measurement gap being related to RRM measurement; the measurement gap used for intra-frequency measurement can also be described as the measurement gap being related to intra-frequency measurement; the measurement gap used for inter-frequency measurement can also be described as the measurement gap being related to inter-frequency measurement; the measurement gap used for handover measurement can also be described as the measurement gap being related to handover measurement; the measurement gap used for L1 measurement can also be described as the measurement gap being related to L1 measurement.

In one embodiment, the first information is used to indicate the following information:
a priority of a measurement gap; and/or,
a measurement gap with a highest priority; and/or,
a priority of a measurement gap whose repetition period is greater than or equal to a first threshold; and/or,
a priority of a measurement gap whose repetition period is greater than or equal to the first threshold being a high priority; and/or,
a measurement gap whose repetition period is greater than or equal to a second threshold.

It is understandable that the priority of the measurement gap transmitted (or described as reported, or described as indicated) by the user equipment includes the priority of the measurement gap preferred by the user equipment (the priority includes a priority level). The network can configure priority of the measurement gap based on this information. The user equipment can indicate the priority of each measurement gap, or only indicate the priority of some measurement gaps.

For example, it can be indicated by 1 bit, for example, TRUE or a value of 1 indicates high priority, which can also be described as indicating the priority of the corresponding measurement gap is high priority. For another example, indicating priority level, which can also be described as indicating the level of the priority of the corresponding measurement gap.

It is to be understood that the measurement gap with the highest priority includes a priority index (which can also be described as a priority level) and/or a measurement gap index (which can also be described as a gap ID or as a gap pattern ID) and/or a length of the measurement gap and/or a repetition period of the measurement gap and/or an offset of the measurement gap and/or a starting position of the measurement gap (including at least one of a starting system frame number, frame, and subframe).

For example, a 1-bit indication, for example, TRUE or a value of 1 indicates the highest priority, which can also be described as the priority of the corresponding measurement gap being the highest. For another example, the user equipment indicates or reports the ID of the measurement gap, which is the measurement gap of the highest priority, or is described as the measurement gap of the highest priority preferred by the user equipment.

In one embodiment, the second information is used to indicate the following information:
aperiodic measurement gaps being of high priority; and/or,
a measurement gap with the longest period being of high priority; and/or,
a measurement gap for intra-frequency measurements being of high priority; and/or,
a measurement gap used for paging being of high priority; and/or,
a measurement gap for system messages being of high priority; and/or,
keeping at least two measurement gaps; and/or,
keeping multi-universal subscriber identity module gaps.

It is to be noted that the paging and system messages here are paging and system messages of another system or another cell.

Specifically, in one scenario, assuming that the user equipment is currently in a system A, the user equipment can receive paging and/or system messages of a system B through the measurement gap. During the measurement gap, the user equipment can temporarily interrupt the connection between the user equipment and the system A and tune to the system B for reception.

In another scenario, assuming that the user equipment is currently in a cell C, the paging and/or system message of a cell D can be received through the measurement gap. During the measurement gap, the user equipment can temporarily interrupt the connection between the user equipment and the cell C and tune to the cell D for reception. The present application does not explicitly state that the second information is transmitted by the network; and this case also includes that the second information is predefined in the protocol.

Here, the multi-universal subscriber identity module may also be described as Multi-Universal Subscriber Identity Module (MUSIM). The multi-universal subscriber identity module gap may also be described as multi-universal subscriber identity module measurement gap, may also be described as MUSIM gap or MUSIM gap(s), or may be described as MUSIM MG (measurement gap). Keeping the multi-universal subscriber identity module gaps may also be described as keeping the colliding multi-universal subscriber identity module (MUSIM) gaps.

Specifically, in a scenario, when there is conflict among multiple MUSIM gaps, all MUSIM gaps are kept.

In another scenario, when one or more MUSIM gaps conflict with other measurement gaps, the MUSIM gap(s) is kept and other measurement gaps are dropped. The colliding measurement gaps may also be described as overlapping measurement gaps, or colliding measurements, including at least one of the following: at least two measurement gaps (or described as two sets of measurement gaps, or described as two measurement gap occasions) overlap in time domain; a time domain gap between at least two measurement gaps (or described as two sets of measurement gaps or described as two measurement gap occasions) is smaller than or equal to a certain threshold. Keeping may also be described as adoption or application.

In one embodiment, the keeping multi-universal subscriber identity module gaps includes: keeping multi-universal subscriber identity module gaps used for the same frequency.

In one embodiment, the second information is used to indicate the following information:
a measurement gap used for paging; and/or,
a measurement gap used for broadcasting; and/or,
a measurement gap used for system message; and/or,
a measurement gap used for RRM measurement; and/or,
a measurement gap used for intra-frequency measurement; and/or,
a measurement gap used for inter-frequency measurement; and/or,
a measurement gap used for handover measurement; and/or,
a measurement gap used for L1 measurement.

It is to be understood that the gain of the network transmitting the second information lies in that the network indicates, to the user equipment, the purpose of the measurement gap. The network can configure the second information with reference to the first information reported by the user equipment.

In one embodiment, the method further includes:
transmitting third information to the user equipment;
where the third information is used to instruct the user equipment to report the purpose and/or priority of the measurement gap.

In actual application, the second information received by the user equipment may further specify how to resolve the measurement gap conflict in a specific scenario.

Based on this, in one embodiment, the second information is further used to indicate at least one of the following:
if aperiodic measurement gap is collided with other measurement gaps, the aperiodic measurement gap is unconditionally kept and/or other measurement gaps are dropped;
if there is a measurement gap with the longest period in the measurement gaps where there is a conflict, the user equipment keeps the measurement gap with the longest period and/or drops other measurement gaps;
in the measurement gaps where there is a conflict, the measurement gap used for the intra-frequency measurement is kept;
if the colliding measurement gaps are MUSIM gaps, the user equipment keeps all collided measurement gaps;
if the colliding measurement gaps are MUSIM gaps and the colliding MUSIM gaps are used for related measurements or receptions at the same frequency, the user equipment keeps all colliding measurement gaps;
in the measurement gap where there is a conflict, the measurement gap used for paging is kept;
in the measurement gap where there is a conflict, the measurement gap used for system messages is kept.

It is to be noted that the second information specifies how to resolve the measurement gap conflict in a specific scenario. In this case, the conflicts may be resolved based without being based on priority.

Here, the measurement gap with the longest period may refer to a measurement gap with the longest period among multiple measurement gaps configured for the user equipment.

Here, the user equipment keeps all colliding measurement gaps, which means that the user equipment does not drop any measurement gap.

It is to be noted that, "used to indicate the following information" in the foregoing description can also be described as "including".

In the embodiment of the present application, the following advantages are possessed:
(1) A solution to the problem of measurement gap conflicts is provided.
   Specifically, the user equipment transmits the first information to assist the network in learning the information related to the measurement or measurement gap that the user equipment expects to use, thereby ensuring that the information on the use of the measurement or measurement gap between the user equipment and the network is consistent, so that it can be avoided that in the event that there is a conflict in measurement gaps, the user equipment drops the measurement gap used for a relatively important function or operation, resulting in the user equipment being unable to complete the function or operation, thereby causing the problem of reduced performance of the user equipment. And/or, the user equipment receives the second information so that the user equipment learns the information related to the measurement or measurement gap that the network expects the user equipment to use, thereby ensuring that the information on the use of the measurement or measurement gap between the user equipment and the network is consistent, so that it can be avoided that in the event that there is a conflict in measurement gaps, the conflict drops the measurement gap used for a relatively important function or operation, resulting in the conflict being unable to complete the function or operation, thereby causing the problem of reduced performance of the user equipment.
(2) The user equipment may notify the network of the purpose and priority of the preferred measurement gap in an explicit manner, or may notify the network of the purpose and priority of the preferred measurement gap in an implicit manner.
(3) The network clearly configures the purpose of the measurement gap. The same measurement gap may have different priorities when used for different purposes.
(4) The second information may predefine how to resolve the measurement gap conflict in a specific scenario. In this way, the user equipment may adopt a predefined method to resolve the conflict in the specific scenario.

FIG. 3 is a schematic diagram of a specific implementation flow of an information transmission method according to an embodiment of the present application. As shown in FIG. 3, the method includes steps 301 to 303.

Step 301: transmitting, by a user equipment, first information to a network device.

The first information includes:
a measurement gap; and/or,
purpose of the measurement gap; and/or,
priority.

Here, the measurement gap represents relevant information of the measurement gap that the user equipment expects to use; the purpose of the measurement gap represents the purpose of the measurement gap that the user equipment expects to use; and the priority is the UE's measurement gap priority preference.

Here, the purpose of the measurement gap includes:
reception of paging; and/or,
reception of broadcasts; and/or,
reception of system messages; and/or,
measurement for RRM; and/or,
intra-frequency measurement; and/or,
inter-frequency measurement; and/or,
measurement for handover; and/or,
layer 1 measurement.

Here, one solution is that the user equipment explicitly notifies the network of the purpose (or describes it as an objective) of the measurement gap.

Here, another solution is to implicitly specify this through configuration of measurement gaps in the first information. This solution does not require including the purpose (or objective) of the measurement gap, but it needs to be agreed upon in the protocol to ensure consistent understanding between the user equipment and the network.

Here, the first information includes:
an aperiodic measurement gap; and/or,
an aperiodic measurement gap used for system message; and/or,
a measurement gap of longest period used for system message; and/or,
an aperiodic measurement gap used for paging; and/or,
a measurement gap of longest period used for paging.

Here, the purpose of the measurement gap is implicitly notified.

It is to be understood that, in one or more measurement gaps reported by the user equipment (or described as reported preferred measurement gaps), it is implicit (or described as negotiated between the network and the user equipment, or described as predefined in the protocol) that the aperiodic measurement gap is used for system messages and/or paging. And/or, in one or more measurement gaps reported by the user equipment (or described as reported preferred measurement gaps), it is implicit (or described as negotiated between the network and the user equipment, or described as predefined in the protocol) that the measurement gap with the largest period (or described as the longest period) is used for system messages and/or paging. In this way, the user equipment does not need to indicate the specific purpose of the measurement gap, and then signaling overhead can be saved.

Here, the user equipment may also receive third information transmitted by the network; where the third information is used to instruct the user equipment to report the purpose and/or priority of the measurement gap. If the third information instructs the user equipment to report the purpose and/or priority of the measurement gap, the first information reported by the user equipment carries the purpose and/or priority of the measurement gap.

Here, one solution is that the user equipment explicitly notifies the network of the priority.

Here, another solution is to implicitly specify this through configuration of measurement gaps in the first information. This solution does not require explicitly including the priority, but it needs to be agreed upon in the protocol to ensure consistent understanding between the user equipment and the network.

Here, the first information is used to indicate the following information:
an aperiodic measurement gap; and/or,
an aperiodic measurement gap of high priority; and/or,
a measurement gap with the longest period having high priority.

Here, the priority is implicitly notified.

It is to be understood that, in one or more measurement gaps reported by the user equipment (or described as reported preferred measurement gaps), it is implicit (or described as negotiated between the network and the user equipment, or described as predefined in the protocol) that the priority of the aperiodic measurement gap is a high priority, or is described as a measurement gap with the highest priority among the measurement gaps reported by the user equipment. In one or more measurement gaps reported by the user equipment (or described as reported preferred measurement gaps), it is implicit (or described as negotiated between the network and the user equipment, or described as predefined in the protocol) that the measurement gap with the largest period (or described as the longest period) is a high priority, or described as a measurement gap with the highest priority among the measurement gaps reported by the user equipment. In this way, the user equipment does not need to indicate the specific priority of the measurement gap, and then signaling overhead can be saved.

Step 302: receiving, by the network device, the first information transmitted by the user equipment; and performing relevant configurations of the measurement gap, priority, and purpose of the measurement gap, based on the first information.

Here, this configuration is used for subsequent UE-related measurements.

Step 303: performing, by the user equipment, corresponding usage purposes or operations in the measurement gap according to the configuration transmitted by the network device, and/or resolving a measurement gap conflict.

Here, the user equipment may resolve the measurement gap conflict based on the priority.

In this example, the following advantages are possessed:
(1) A solution to the problem of measurement gap conflicts is provided.
   Specifically, the user equipment transmits the first information to the network to inform the network how the user equipment uses the measurement gap, including the purpose and priority of the preferred measurement gap, so as to assist the network in knowing how the user equipment uses the measurement gap, thereby ensuring that the information on the use of the measurement or measurement gap between the user equipment and the network is consistent, so that it can be avoided that in the event that there is a conflict in measurement gaps, the user equipment drops the measurement gap used for a relatively important function or operation, resulting in the user equipment being unable to complete the function or operation.
(2) The user equipment may notify the network of the purpose and priority of the preferred measurement gap in an explicit manner, or may notify the network of the purpose and priority of the preferred measurement gap in an implicit manner.

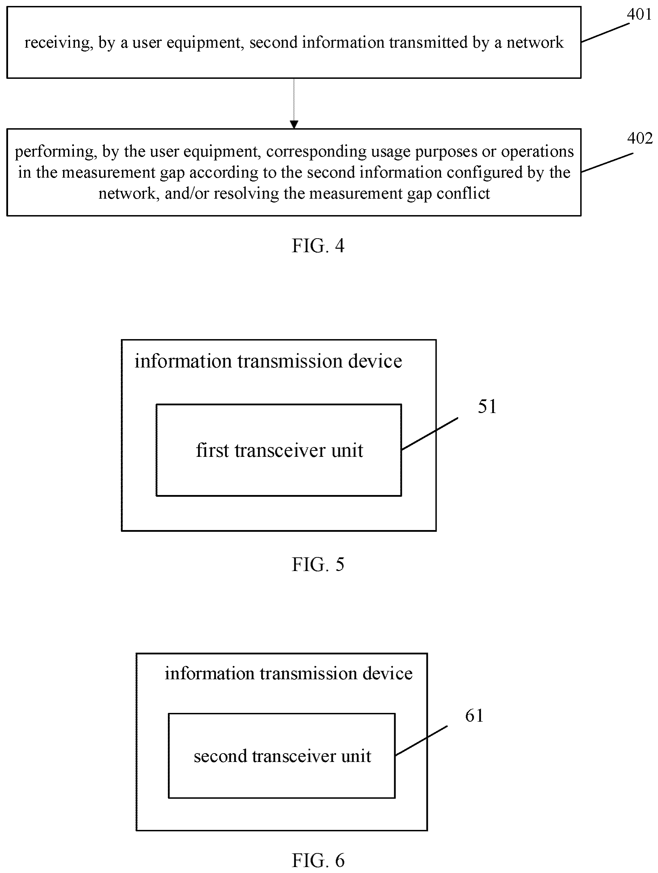

FIG. 4 is a schematic diagram of a specific implementation flow of an information transmission method according to an embodiment of the present application. As shown in FIG. 4, the method includes steps 401 to 402.

Step 401: receiving, by a user equipment, second information transmitted by a network.

The second information includes:
measurement gap; and/or,
purpose of the measurement gap; and/or,
priority.

Here, the measurement gap represents relevant information of the measurement gap configured by the network for the user equipment; the purpose of the measurement gap represents the purpose of the measurement gap configured by the network for the user equipment; and the priority represents the priority of the measurement gap configured by the network for the user equipment.

Here, the configuration related to the measurement gap, priority, and purpose of the measurement gap indicated by the network is used for subsequent UE-related measurements.

Here, the purpose of the measurement gap includes:
reception of paging; and/or,
reception of broadcasts; and/or,
reception of system messages; and/or,
measurement for RRM; and/or,
intra-frequency measurement; and/or,
inter-frequency measurement; and/or,
measurement for handover; and/or,
layer 1 measurement.

Here, in case that the same measurement gap is used for different purposes, the measurement gap has different priorities when using for different purposes.

Step 402: performing, by the user equipment, corresponding usage purposes or operations in the measurement gap according to the second information configured by the network, and/or resolving the measurement gap conflict.

Here, the user equipment may resolve the measurement gap conflict based on the priority.

In this example, the following advantages are possessed.
(1) A solution to the problem of measurement gap conflicts is provided.
   Specifically, the user equipment receives the second information transmitted by the network, so that the information on the use of the measurement gap between the user equipment and the network is consistent. In this way, it can be avoided that in the event that there is a conflict in measurement gaps, the user equipment drops the measurement gap used for a relatively important function or operation, resulting in the user equipment being unable to complete the function or operation.
(2) The user equipment may notify the network of the purpose and priority of the preferred measurement gap in an explicit manner, or may notify the network of the purpose and priority of the preferred measurement gap in an implicit manner.

In order to implement the information transmission method of the embodiment of the present application, one embodiment of the present application further provides an information transmission device. FIG. 5 is a schematic diagram of an information transmission device according to one embodiment of the present application. As shown in FIG. 5, the device includes:
a first transceiver unit 51 used to transmit first information, where the first information is related to measurement or measurement gap; and/or, receive second information, where the second information is related to measurement or measurement gap.

In one embodiment, the first transceiver unit 51 is used to:
transmit first information to the network;
where the first information includes:
   a measurement gap; and/or,
   purpose of the measurement gap; and/or,
   priority.

Here, the measurement gap represents relevant information of the measurement gap that the user equipment expects to use; the purpose of the measurement gap represents the purpose of the measurement gap that the user equipment expects to use; and the priority is the UE's measurement gap priority preference.

In one embodiment, the first transceiver unit 51 is used to:
receive second information sent by the network;
where the second information includes:
   measurement gap; and/or,
   purpose of the measurement gap; and/or,
   priority.

Here, the measurement gap represents relevant information of the measurement gap configured by the network for the user equipment; the purpose of the measurement gap represents the purpose of the measurement gap configured by the network for the user equipment; and the priority represents the priority of the measurement gap configured by the network for the user equipment.

In one embodiment, the purpose of the measurement gap includes:
reception of paging; and/or,
reception of broadcasts; and/or,
reception of system messages; and/or,
measurement for RRM; and/or,
intra-frequency measurement; and/or,
inter-frequency measurement; and/or,
measurement for handover; and/or,
layer 1 measurement.

In one embodiment, in case that the same measurement gap is used for different purposes, the measurement gap has different priorities when using for different purposes.

In one embodiment, the first information is used to indicate the following information:
an aperiodic measurement gap; and/or,
an aperiodic measurement gap used for system message; and/or,
a measurement gap of longest period used for system message; and/or,
an aperiodic measurement gap used for paging; and/or,
a measurement gap of longest period used for paging.

In one embodiment, the first information is used to indicate the following information:
an aperiodic measurement gap; and/or,
an aperiodic measurement gap of high priority; and/or,
a measurement gap with the longest period having high priority.

In one embodiment, the first information is used to indicate the following information:
a measurement gap used for paging; and/or,
a measurement gap used for broadcasting; and/or,
a measurement gap used for system message; and/or,
a measurement gap used for RRM measurement; and/or,
a measurement gap used for intra-frequency measurement; and/or,
a measurement gap used for inter-frequency measurement; and/or,
a measurement gap used for handover measurement; and/or,
a measurement gap used for L1 measurement.

In one embodiment, the first information is used to indicate the following information:
a priority of a measurement gap; and/or,
a measurement gap with a highest priority; and/or,
a priority of a measurement gap whose repetition period is greater than or equal to a first threshold; and/or,
a priority of a measurement gap whose repetition period is greater than or equal to the first threshold being a high priority; and/or,
a measurement gap whose repetition period is greater than or equal to a second threshold.

In one embodiment, the second information is used to indicate the following information:
aperiodic measurement gaps being of high priority; and/or,
a measurement gap with the longest period being of high priority; and/or,
a measurement gap for intra-frequency measurements being of high priority; and/or,
a measurement gap used for paging being of high priority; and/or,
a measurement gap for system messages being of high priority; and/or,
keeping at least two measurement gaps; and/or,
keeping multi-universal subscriber identity module gaps.

In one embodiment, the step of keeping multi-universal subscriber identity module gaps includes:
keeping multi-universal subscriber identity module gaps used for the same frequency.

In one embodiment, the second information is used to indicate the following information:
a measurement gap used for paging; and/or,
a measurement gap used for broadcasting; and/or,
a measurement gap used for system message; and/or,
a measurement gap used for RRM measurement; and/or,
a measurement gap used for intra-frequency measurement; and/or,
a measurement gap used for inter-frequency measurement; and/or,
a measurement gap used for handover measurement; and/or,
a measurement gap used for L1 measurement.

In one embodiment, the first transceiver unit 51 is further used to:
receive third information transmitted by the network;
where the third information is used to instruct the user equipment to report the purpose and/or priority of the measurement gap.

In one embodiment, the second information is further used to indicate at least one of the following:
if aperiodic measurement gap is collided with other measurement gaps, the aperiodic measurement gap is unconditionally kept and/or other measurement gaps are dropped;
if there is a measurement gap with the longest period in the measurement gaps where there is a conflict, the user equipment keeps the measurement gap with the longest period and/or drops other measurement gaps;
in the measurement gaps where there is a conflict, the measurement gap used for the intra-frequency measurement is kept;
if the colliding measurement gaps are MUSIM gaps, the user equipment keeps all colliding measurement gaps;
if the colliding measurement gaps are MUSIM gaps and the colliding MUSIM gaps are used for related measurements or receptions at the same frequency, the user equipment keeps all colliding measurement gaps;
in the measurement gap where there is a conflict, the measurement gap used for paging is kept;
in the measurement gap where there is a conflict, the measurement gap used for system messages is kept.

In actual application, the first transceiver unit 51 can be implemented by a communication interface in the information transmission device.

It is to be noted that the information transmission device provided in the above embodiment, when performing information transmission, is merely exemplified by division of the above program modules. In practical applications, the above processing tasks can be assigned to different program modules for completion as needed, i.e., dividing the internal structure of the device into different program modules to complete all or part of the processing described above. Additionally, the information transmission device provided in the above embodiments shares the same concept as the information transmission method embodiments. The detailed implementation process thereof is described in the method embodiments, and thus will not be repeated here.

In order to implement the information transmission method of the embodiment of the present application, one embodiment of the present application further provides an information transmission device. FIG. 6 is a schematic diagram of an information transmission device according to one embodiment of the present application. As shown in FIG. 6, the device includes:
a second transceiver unit 61 used to receive first information, where the first information is related to measurement or measurement gap; and/or, transmit second information, where the second information is related to measurement or measurement gap.

In one embodiment, the second transceiver unit 61 is used to:
receive the first information transmitted by a user equipment;
where the first information includes:
a measurement gap; and/or,
purpose of the measurement gap; and/or,
priority.

Here, the measurement gap represents relevant information of the measurement gap that the user equipment expects to use; the purpose of the measurement gap represents the purpose of the measurement gap that the user equipment expects to use; and the priority is the UE's measurement gap priority preference.

In one embodiment, the second transceiver unit 61 is used to:
transmit the second information to the user equipment;
where the second information includes:
measurement gap; and/or,
purpose of the measurement gap; and/or,
priority.

Here, the measurement gap represents relevant information of the measurement gap configured by the network for the user equipment; the purpose of the measurement gap represents the purpose of the measurement gap configured by the network for the user equipment; and the priority represents the priority of the measurement gap configured by the network for the user equipment.

In one embodiment, the purpose of the measurement gap includes:
reception of paging; and/or,
reception of broadcasts; and/or,
reception of system messages; and/or,
measurement for RRM; and/or,
intra-frequency measurement; and/or,
inter-frequency measurement; and/or,
measurement for handover; and/or,
layer 1 measurement.

In one embodiment, in case that the same measurement gap is used for different purposes, the measurement gap has different priorities when using for different purposes.

In one embodiment, the first information is used to indicate the following information:
an aperiodic measurement gap; and/or,
an aperiodic measurement gap used for system message; and/or,
a measurement gap of longest period used for system message; and/or,
an aperiodic measurement gap used for paging; and/or,
a measurement gap of longest period used for paging.

In one embodiment, the first information is used to indicate the following information:
an aperiodic measurement gap; and/or,
an aperiodic measurement gap of high priority; and/or,
a measurement gap with the longest period having high priority.

In one embodiment, the first information is used to indicate the following information:
a measurement gap used for paging; and/or,
a measurement gap used for broadcasting; and/or,
a measurement gap used for system message; and/or,
a measurement gap used for RRM measurement; and/or,
a measurement gap used for intra-frequency measurement; and/or,
a measurement gap used for inter-frequency measurement; and/or,
a measurement gap used for handover measurement; and/or,
a measurement gap used for L1 measurement.

In one embodiment, the first information is used to indicate the following information:
a priority of a measurement gap; and/or,
a measurement gap with a highest priority; and/or,
a priority of a measurement gap whose repetition period is greater than or equal to a first threshold; and/or,
a priority of a measurement gap whose repetition period is greater than or equal to the first threshold being a high priority; and/or,
a measurement gap whose repetition period is greater than or equal to a second threshold.

In one embodiment, the second information is used to indicate the following information:
aperiodic measurement gaps being of high priority; and/or,
a measurement gap with the longest period being of high priority; and/or,
a measurement gap for intra-frequency measurements being of high priority; and/or,
a measurement gap used for paging being of high priority; and/or,
a measurement gap for system messages being of high priority; and/or,
keeping at least two measurement gaps; and/or,
keeping multi-universal subscriber identity module gaps.

In one embodiment, the step of keeping multi-universal subscriber identity module gaps includes:
keeping multi-universal subscriber identity module gaps used for the same frequency.

In one embodiment, the second information is used to indicate the following information:
a measurement gap used for paging; and/or,
a measurement gap used for broadcasting; and/or,
a measurement gap used for system message; and/or,
a measurement gap used for RRM measurement; and/or,
a measurement gap used for intra-frequency measurement; and/or,
a measurement gap used for inter-frequency measurement; and/or,
a measurement gap used for handover measurement; and/or,
a measurement gap used for L1 measurement.

In one embodiment, the second transceiver unit 61 is further used to:
transmit third information to the user equipment;
where the third information is used to instruct the user equipment to report the purpose and/or priority of the measurement gap.

In one embodiment, the second information is further used to indicate at least one of the following:
if aperiodic measurement gap is collided with other measurement gaps, the aperiodic measurement gap is unconditionally kept and/or other measurement gaps are dropped; and/or,
if there is a measurement gap with the longest period in the measurement gaps where there is a conflict, the user equipment keeps the measurement gap with the longest period and/or drops other measurement gaps; and/or,
in the measurement gaps where there is a conflict, the measurement gap used for the intra-frequency measurement is kept; and/or,
if the colliding measurement gaps are MUSIM gaps, the user equipment keeps all collided measurement gaps; and/or,
if the colliding measurement gaps are MUSIM gaps and the colliding MUSIM gaps are used for related measurements or receptions at the same frequency, the user equipment keeps all colliding measurement gaps; and/or,
in the measurement gap where there is a conflict, the measurement gap used for paging is kept; and/or,
in the measurement gap where there is a conflict, the measurement gap used for system messages is kept.

It is to be noted that the information transmission device provided in the above embodiment, when performing information transmission, is merely exemplified by division of the above program modules. In practical applications, the above processing tasks can be assigned to different program modules for completion as needed, i.e., dividing the internal structure of the device into different program modules to complete all or part of the processing described above. Additionally, the information transmission device provided in the above embodiments shares the same concept as the information transmission method embodiments. The detailed implementation process thereof is described in the method embodiments, and thus will not be repeated here.

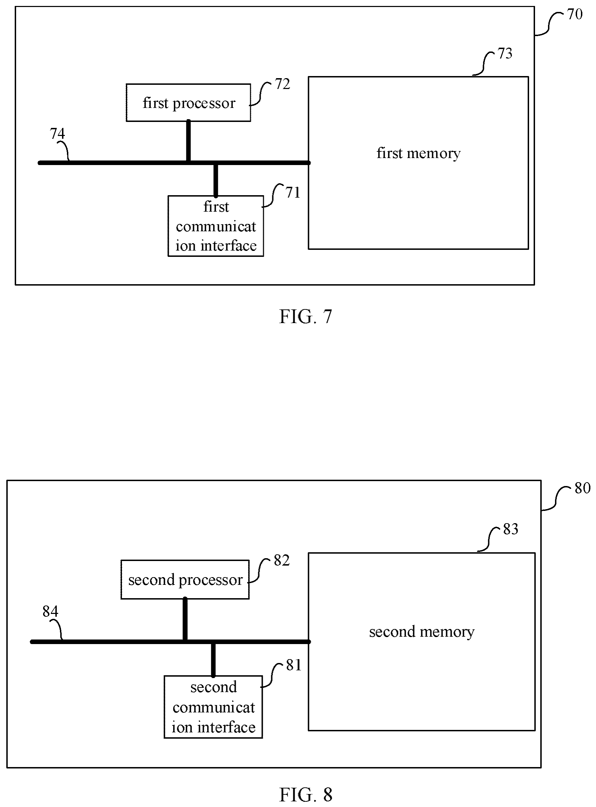

One embodiment of the present application further provides a user equipment (UE), as shown in FIG. 7, including:
a first communication interface 71 capable of exchanging information with other devices;
a first processor 72 coupled with the first communication interface 71 and used to, when executing a computer program, perform the method provided by one or more technical solutions on the UE-side. The computer program is stored in a first memory 73.

It is to be noted that the specific processing process of the first processor 72 and the first communication interface 71 is detailed in the method embodiment and will not be repeated here.

Of course, in actual application, the various components in the user equipment 70 are coupled together through the bus system 74. It is understandable that the bus system 74 is used to realize the connection and communication between these components. In addition to the data bus, the bus system 74 also includes a power bus, a control bus and a status signal bus. However, for the sake of clarity, various buses are marked as the bus system 74 in FIG. 7.

The first memory 73 in the embodiment of the present application is used to store various types of data to support the operation of the user equipment 70. Examples of such data include: any computer program used to operate on the user equipment 70.

The method disclosed in the above embodiment of the present application can be applied to the first processor 72, or implemented by the first processor 72. The first processor 72 may be an integrated circuit chip with signal processing capabilities. In the implementation process, each step of the above method can be completed by the hardware integrated logic circuit or software instructions in the first processor 72. The above first processor 72 may be a general-purpose processor, a digital data processor (DSP), or other programmable logic devices, discrete gates or transistor logic devices, discrete hardware components, etc. The first processor 72 can implement or execute the various methods, steps and logic block diagrams disclosed in the embodiments of the present application. The general-purpose processor may be a microprocessor or any conventional processor, etc. In combination with the steps of the method disclosed in the embodiment of the present application, it can be directly executed by a hardware decoding processor, or it can be executed by a combination of hardware and software modules in the decoding processor. The software module can be located in a storage medium, which is located in the first memory 73. The first processor 72 reads the information in the first memory 73 and completes the steps of the above method in combination with its hardware.

One embodiment of the present application further provides a network device, as shown in FIG. 8, including:
a second communication interface 81 capable of exchanging information with other devices;
a second processor 82 coupled with a second communication interface 81 and used to, when executing a computer program, perform the method provided by one or more technical solutions of the network device side. The computer program is stored in the second memory 83.

It is to be noted that the specific processing process of the second processor 82 and the second communication interface 81 is detailed in the method embodiment, which will not be repeated here.

Of course, in actual application, the various components in the network device 80 are coupled together through the bus system 84. It is understandable that the bus system 84 is used to realize the connection and communication between these components. In addition to the data bus, the bus system 84 also includes a power bus, a control bus and a status signal bus. However, for the sake of clarity, various buses are marked as the bus system 84 in FIG. 8.

The second memory 83 in the embodiment of the present application is used to store various types of data to support the operation of the network device 80. Examples of such data include: any computer program used to operate on the network device 80.

The method disclosed in the above embodiment of the present application can be applied to the second processor 82, or implemented by the second processor 82. The second processor 82 may be an integrated circuit chip with signal processing capabilities. In the implementation process, each step of the above method can be completed by the hardware integrated logic circuit or software instructions in the second processor 82. The above second processor 82 may be a general processor, a digital data processor (DSP), or other programmable logic devices, discrete gates or transistor logic devices, discrete hardware components, etc. The second processor 82 can implement or execute the various methods, steps and logic block diagrams disclosed in the embodiment of the present application. The general processor may be a microprocessor or any conventional processor, etc. In combination with the steps of the method disclosed in the embodiment of the present application, it can be directly executed by a hardware decoding processor, or it can be executed by a combination of hardware and software modules in the decoding processor. The software module can be located in a storage medium, which is located in the second memory 83, and the second processor 82 reads the information in the second memory 83 and completes the steps of the above method in combination with its hardware.

In an exemplary embodiment, the user equipment 70 and the network device 80 may be implemented by one or more application specific integrated circuits (ASIC), DSP, programmable logic device (PLD), complex programmable logic device (CPLD), field programmable gate array (FPGA), general-purpose processor, controller, microcontroller (MCU), microprocessor, or other electronic components to execute the aforementioned method.

It is to be understood that the memory (first memory 73, second memory 83) of the embodiment of the present application can be a volatile memory or a non-volatile memory, and can also include both volatile and non-volatile memories. The non-volatile memory can be a read-only memory (ROM), a programmable read-only memory (PROM), an erasable programmable read-only memory (EPROM), an electrically erasable programmable read-only memory (EEPROM), a magnetic random access memory (FRAM), a flash memory, a magnetic surface memory, an optical disc, or a compact disc read-only memory (CD-ROM); the magnetic surface memory can be a disk memory or a tape memory. The volatile memory can be a random access memory (RAM), which is used as an external cache. By way of example but not limitation, many forms of RAM are available, such as static random access memory (SRAM), synchronous static random access memory (SSRAM), dynamic random access memory (DRAM), synchronous dynamic random access memory (SDRAM), double data rate synchronous dynamic random access memory (DDRSDRAM), enhanced synchronous dynamic random access memory (ESDRAM), synchronous link dynamic random access memory (SLDRAM), direct memory bus random access memory (DRRAM). The memory described in the embodiments of the present application is intended to include but is not limited to these and any other suitable types of memory.

In an exemplary embodiment, the present application further provides a storage medium, namely a computer storage medium, specifically a computer-readable storage medium, for example, a memory storing a computer program. The computer program can be executed by the first processor 72 of the user equipment 70 to complete the steps of the aforementioned UE-side method. The computer-readable storage medium can be a memory such as FRAM, ROM, PROM, EPROM, EEPROM, Flash Memory, magnetic surface storage, optical disk, or CD-ROM.

It is to be noted that: "first", "second", etc. are used to distinguish similar objects, and are not necessarily used to describe a specific order or sequence.

In addition, the technical solutions described in the embodiments of the present application can be combined arbitrarily without conflict.

The above description is only a preferred embodiment of the present application and is not intended to limit the protection scope of the present application.

## Claims

1. An information transmission method, applied to a user equipment (UE), comprising:
transmitting first information, wherein the first information is related to measurement or a measurement gap;
and/or,
receiving second information, wherein the second information is related to measurement or a measurement gap.

2. The method according to claim 1, wherein the transmitting first information, indicates:
transmitting the first information to a network;
wherein the first information includes:
a measurement gap; and/or,
purpose of the measurement gap; and/or,
priority.

3. The method according to claim 2, wherein
the measurement gap represents relevant information of the measurement gap that the user equipment expects to use;
the purpose of the measurement gap represents the purpose of the measurement gap that the user equipment expects to use; and
the priority is the UE's measurement gap priority preference.

4. The method according to claim 2, wherein
the measurement gap represents relevant information of the measurement gap requested by the user equipment;
the purpose of the measurement gap represents the purpose of the measurement gap requested by the user equipment; and
the priority represents the priority of the measurement gap requested by the user equipment.

5. The method according to claim 1, wherein the receiving second information, includes:
receiving second information sent by a network;
wherein the second information includes:
a measurement gap; and/or,
purpose of the measurement gap; and/or,
priority.

6. The method according to claim 5, wherein
the measurement gap represents relevant information of the measurement gap configured by the network for the user equipment;
the purpose of the measurement gap represents the purpose of the measurement gap configured by the network for the user equipment; and
the priority is the priority of the measurement gap configured by the network for the user equipment.

7. The method according to claim 2 or 5, wherein the purpose of the measurement gap includes:
reception of paging; and/or,
reception of broadcast; and/or,
reception of system message; and/or,
measurement for RRM; and/or,
intra-frequency measurement; and/or,
inter-frequency measurement; and/or,
measurement for handover; and/or,
layer 1 measurement.

8. The method according to claim 2 or 5, wherein in case that the same measurement gap is used for different purposes, the measurement gap has different priorities when using for the different purposes.

9. The method according to claim 2 or 5, wherein different measurement gaps have different priorities.

10. The method according to claim 1, wherein the first information is used to indicate the following information:
an aperiodic measurement gap; and/or,
an aperiodic measurement gap used for system message; and/or,
a measurement gap of longest period used for system message; and/or,
an aperiodic measurement gap used for paging; and/or,
a measurement gap of longest period used for paging.

11. The method according to claim 1, wherein the first information is used to indicate the following information:
an aperiodic measurement gap; and/or,
an aperiodic measurement gap of high priority; and/or,
a measurement gap with a longest period having high priority.

12. The method according to claim 1, wherein the first information is used to indicate the following information:
a measurement gap used for paging; and/or,
a measurement gap used for broadcasting; and/or,
a measurement gap used for system message; and/or,
a measurement gap used for RRM measurement; and/or,
a measurement gap used for intra-frequency measurement; and/or,
a measurement gap used for inter-frequency measurement; and/or,
a measurement gap used for handover measurement; and/or,
a measurement gap used for L1 measurement.

13. The method according to claim 1, wherein the first information is used to indicate the following information:
a priority of a measurement gap; and/or,
a measurement gap with a highest priority; and/or,
a priority of a measurement gap whose repetition period is greater than or equal to a first threshold; and/or,
a priority of a measurement gap whose repetition period is greater than or equal to the first threshold being a high priority; and/or,
a measurement gap whose repetition period is greater than or equal to a second threshold.

14. The method according to claim 1, wherein the second information is used to indicate the following information:
an aperiodic measurement gap being of high priority; and/or,
a measurement gap with a longest period being of high priority; and/or,
a measurement gap for intra-frequency measurements being of high priority; and/or,
a measurement gap used for paging being of high priority; and/or,
a measurement gap for system messages being of high priority; and/or,
keeping at least two measurement gaps; and/or,
keeping multi-universal subscriber identity module gaps.

15. The method according to claim 14, wherein the keeping multi-universal subscriber identity module gaps includes:
keeping multi-universal subscriber identity module gaps used for the same frequency.

16. The method according to claim 1, wherein the second information is used to indicate the following information:
a measurement gap used for paging; and/or,
a measurement gap used for broadcasting; and/or,
a measurement gap used for system message; and/or,
a measurement gap used for RRM measurement; and/or,
a measurement gap used for intra-frequency measurement; and/or,
a measurement gap used for inter-frequency measurement; and/or,
a measurement gap used for handover measurement; and/or,
a measurement gap used for L1 measurement.

17. The method according to claim 1, wherein the method further includes:
receiving third information transmitted by the network;
wherein the third information is used to instruct the user equipment to report the purpose and/or priority of the measurement gap.

18. The method according to claim 1, wherein the second information is used to indicate the following information:
if aperiodic measurement gap is collided with other measurement gaps, the aperiodic measurement gap is unconditionally kept and/or other measurement gaps are dropped; and/or,
if there is a measurement gap with a longest period in the measurement gaps where there is a conflict, the user equipment keeps the measurement gap with the longest period and/or drops other measurement gaps; and/or,
in the measurement gaps where there is a conflict, the measurement gap used for the intra-frequency measurement is kept; and/or,
if the colliding measurement gaps are multi-universal subscriber identity module (MUSIM) gaps, the user equipment keeps all collided measurement gaps; and/or,
if the colliding measurement gaps are MUSIM gaps and the colliding MUSIM gaps are used for related measurements or receptions at the same frequency, the user equipment keeps all colliding measurement gaps; and/or,
in the measurement gap where there is a conflict, the measurement gap used for paging is kept; and/or,
in the measurement gap where there is a conflict, the measurement gap used for system messages is kept.

19. The method according to claim 1, wherein the method further includes: resolving, by the user equipment, conflicts through at least one of the following methods:
if aperiodic measurement gap is collided with other measurement gaps, the aperiodic measurement gap is unconditionally kept and/or other measurement gaps are dropped;
if there is a measurement gap with a longest period in the measurement gaps where there is a conflict, the user equipment keeps the measurement gap with the longest period and/or drops other measurement gaps;
in the measurement gaps where there is a conflict, the measurement gap used for the intra-frequency measurement is kept;
if the colliding measurement gaps are MUSIM gaps, the user equipment keeps all colliding measurement gaps;
if the colliding measurement gaps are MUSIM gaps and the colliding MUSIM gaps are used for related measurements or receptions at the same frequency, the user equipment keeps all colliding measurement gaps;
in the measurement gap where there is a conflict, the measurement gap used for paging is kept;
in the measurement gap where there is a conflict, the measurement gap used for system messages is kept;
in the measurement gap where there is a conflict, a MUSIM gap used for aperiodic is kept;
in the measurement gap where there is a conflict, a MUSIM gap with a highest priority is kept.

20. An information transmission method, applied to a network device, comprising:
receiving first information, wherein the first information is related to measurement or a measurement gap;
and/or,
transmitting second information, wherein the second information is related to measurement or a measurement gap.

21. The method according to claim 20, wherein the receiving first information, includes:
receiving the first information transmitted by a user equipment;
wherein the first information includes:
a measurement gap; and/or,
purpose of the measurement gap; and/or,
priority.

22. The method according to claim 20, wherein the transmitting second information, includes:
transmitting the second information to the user equipment;
wherein the second information includes:
measurement gap; and/or,
purpose of the measurement gap; and/or,
priority.

23. An information transmission device, comprising:
a first transceiver unit used to transmit first information, wherein the first information is related to measurement or measurement gap; and/or, receive second information, wherein the second information is related to measurement or measurement gap.

24. An information transmission device, comprising:
a second transceiver unit used to receive first information, wherein the first information is related to measurement or measurement gap; and/or, transmit second information, wherein the second information is related to measurement or measurement gap.

25. A user equipment, comprising: a processor and a memory for storing a computer program executable on the processor;
wherein the processor is used to, when executing the computer program, perform steps of the method according to any one of claims 1 to 19.

26. A network device, comprising: a processor and a memory for storing a computer program executable on the processor;
wherein the processor is used to, when executing the computer program, perform steps of the method according to any one of claims 20 to 22.

27. A computer-readable storage medium, comprising a program stored thereon; wherein the program, when executed by a processor, causes the processor to perform the method according to any one of claims 1 to 19, or perform the method according to any one of claims 20 to 22.
